# EUROPÄISCHE PATENTSCHRIFT

(11) **EP 0 675 583 B1**
(45) Veröffentlichungstag und Bekanntmachung des Hinweises auf die Patenterteilung: **16.09.1998**
(21) Anmeldenummer: 95104428.8
(22) Anmeldetag: 25.03.1995
(51) Int. Cl.: H02G 3/14, H02G 3/18

(54) **Aufputzmaterial für ein elektrisches Bauteil, z.B. Schalter, Steckdose und dergleichen**
Arrangement for wall mounting of an electrical device such as switch, outlet or similar
Matériel pour montage en surface d'un élément électrique tel qu'interrupteur, prise ou similaire

(30) Priorität: 31.03.1994 DE 4411212
(43) Veröffentlichungstag der Anmeldung: 04.10.1995
(73) Patentinhaber: ABB PATENT GmbH, 68309 Mannheim (DE)
(72) Erfinder: Berendsen, Albertus, NL-6713 AV Ede (NL); Richters, Hendrikus, NL-6983 EB Doesburg (NL)
(74) Vertreter: Rupprecht, Klaus, Dipl.-Ing.

(56) Entgegenhaltungen:
- DE-A- 1 690 418
- DE-B- 1 267 743

## Beschreibung

Die Erfindung betrifft Aufputzmaterial für ein elektrisches Bauteil gemäß dem Oberbegriff des Anspruches 1.

Bei Aufputzmaterial für Schalter und Steckdosen ist normalerweise ein Sockel vorgesehen, der den Schalter oder die Steckdose enthält und auf den eine Kappe aufmontiert wird, die mittels einer Schraubverbindung fixiert wird, um den Schalter oder die Steckdose soweit abzudecken, daß eine Gefährdung durch Berührung elektrische Spannung führender Teile vermieden wird.

Handelsüblich ist, den Sockel auf eine Montageplatte aufzuschrauben, die elektrische Verdrahtung anzuschließen und danach die Kappe auf den Sockel zu schieben und zu verschrauben. Steckdosen werden statt auf einer Montageplatte dann und wann auf einem Montagedeckel einer Abzweigdose montiert und zwar in ähnlicher Weise wie eben beschrieben.

Die elektrische Verdrahtung muß dabei unter den Sockel gedrückt werden und durch ein durch Platzmangel begrenztes kleines Loch geführt werden. Diese Montageweise ist recht aufwendig, insbesondere wegen der starren Drähte. Weiterhin kann irrtümlicherweise die Kappe von der Steckdose entfernt werden, obwohl man eigentlich die ganze Einheit demontieren möchte.

Ein Installationsmaterial gemäß der eingangs genannten Art ist aus der DE-B 12 67 743 bekannt geworden. Innerhalb einer Dose, die als Unterputzdose ausgebildet ist, ist ein Bügel vorgesehen, der auf der Stirnkante der Zylinderwandung der Dose mittels Schrauben befestigt ist und der zur Halterung des Installationsgerätes innerhalb der Dose mittels eines Spannstiftes dient. Die Abdeckung gehört zum Installationsgerät und ist mit dem Bügel nicht direkt verbunden.

Aufgabe der Erfindung ist es, ein Installationsmaterial gemäß dem Oberbegriff des Anspruches 1 soweit zu verbessern, daß eine getrennte Lösung von Abdeckkappe vom Sockel vermieden wird.

Diese Aufgabe wird erfindungsgemäß gelöst durch die kennzeichnenden Merkmale des Anspruches 1.

Auf die Trägerplatte wird zunächst das elektrische Bauteil, z. B. der Sockel einer Steckdose, festgelegt, sodann die Trägerplatte mit dem elektrischen Bauteil mit der Kappe verbunden, wobei das elektrische Bauteil zwischen der Trägerplatte und der Abdeckkappe sitzt; diese vormontierte Einheit aus Trägerplatte, elektrischem Bauteil und Kappe wird dann auf dem freien Rand der Abzweigdose befestigt. Dadurch ist die Verdrahtung von vornherein schon vorgesehen und muß nur noch mit den Anschlußelementen innerhalb der Dose verbunden werden, ein Hineindrücken der Verdrahtung durch kleine Bohrungen oder Löcher in den Raum der Dose wird dadurch vermieden.

Wie erwähnt, ist erfindungsgemäß die Trägerplatte mit dem elektrischen Bauteil an der Kappe verrastet, wobei die Kappe die Trägerplatte mit einem Kragen umgreift. Die Trägerplatte wird dabei zwischen der Kappe und dem freien Rand der Dose fixiert. Für diese Art der Befestigung von Kappe und Sockel an der Dose werden keine Schrauben verwendet; die Verdrahtung ist auf einfache Weise anzubringen und die Kappe kann nicht von vorn von dem Sockel entfernt werden.

Weitere vorteilhafte Ausgestaltungen und Verbesserungen der Erfindung sind den Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Aufsicht auf eine erfindungsgemäße Anordnung,
- Fig. 2: eine Schnittansicht gemäß Schnittlinie A-A der Fig. 1,
- Fig. 3: eine Schnittanscicht gemäß Schnittlinie B-B der Fig. 2,
- Fig. 4: eine Aufsicht auf eine Trägerplatte,
- Fig. 5: eine Schnittansicht der Trägerplatte gemäß Schnittlinie V-V der Fig. 4 und
- Fig. 6: eine Seitenansicht auf die Trägerplatte gemäß den Fig. 4 und 5.

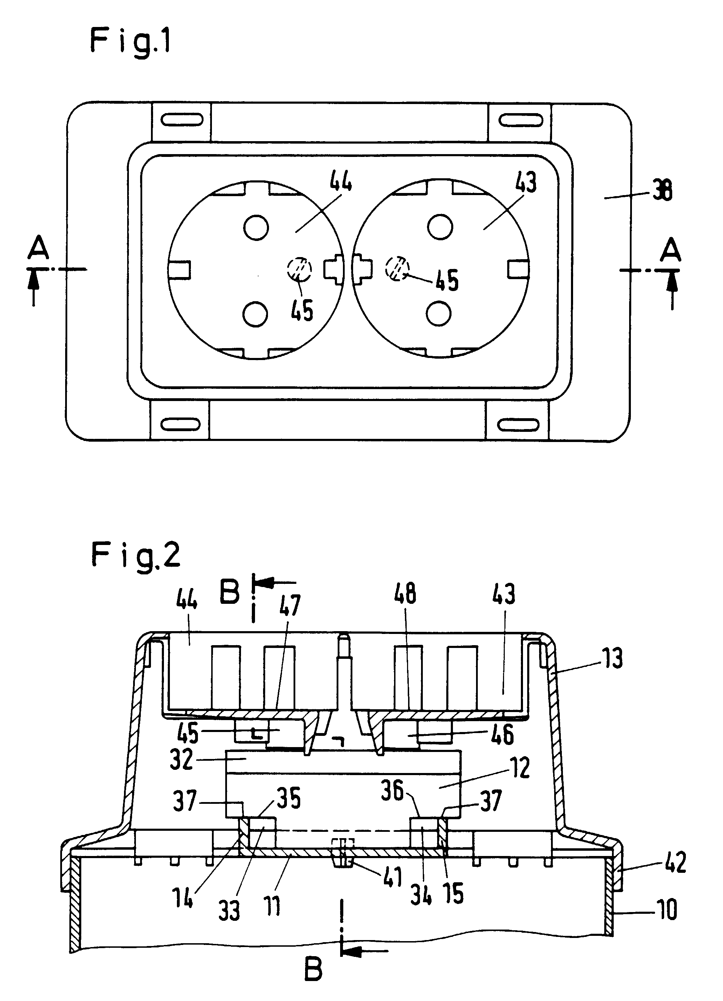

Es sei nun Bezug genommen auf die Fig. 2.
Teilweise geschnitten ist eine Aufputzdose 10 sichtbar, auf der eine Zwischenplatte oder Trägerplatte 11 aufgesetzt ist, auf der ein Sockel 12 für eine Steckdose befestigt ist, die selbst wiederum von einer Abdeckkappe 13 abgedeckt ist.

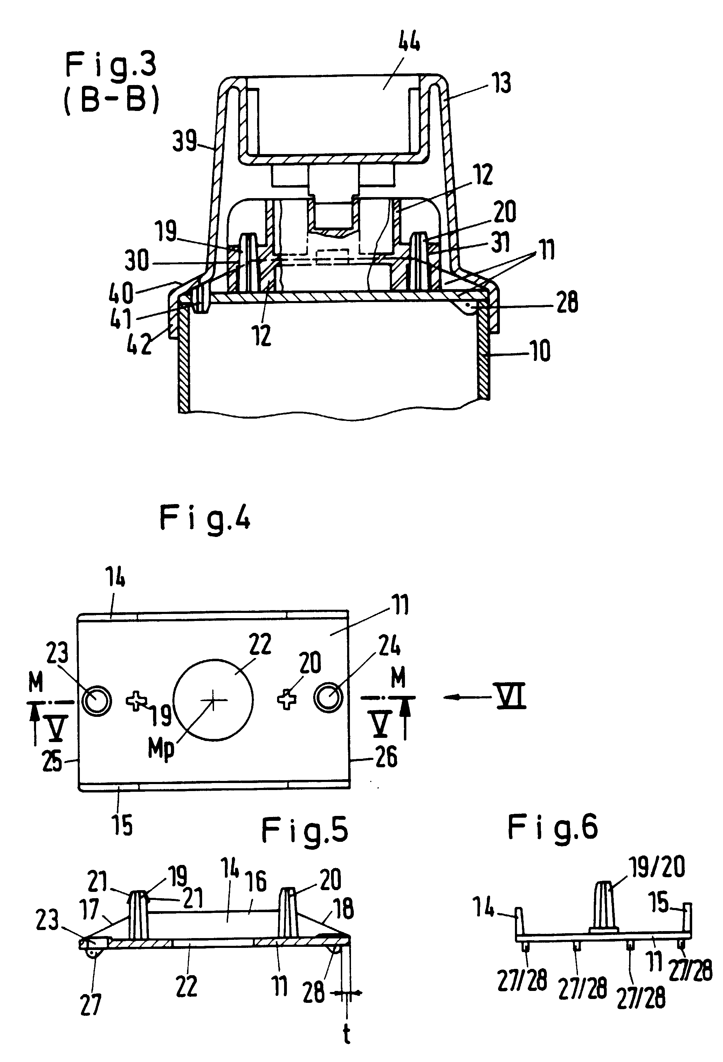

Die Zwischenplatte 11, die in den Fig. 4 bis 6 dargestellt ist, besitzt eine rechteckige Form, an deren Längsseiten Versteifungsrippen 14 und 15 angformt sind, die senkrecht zu der Zwischenplatte 11 verlaufen und eine Trapezform mit einem mittleren rechteckförmigen Bereich 16 und daran anschließende Abschrägungen 17 und 18 aufweisen. Auf der Längsmittellinie M-M befinden sich in Abstand zu dem Mittelpunkt MP zwei vorspringende, im Querschnitt kreuzförmige und sich zur Spitze hin verjüngende Vorsprünge 19 und 20, deren freie Enden Widerhaken 21 aufweisen. Konzentrisch zur Mitte MP befindet sich eine kreisförmige Öffnung 22 und außerhalb der beiden Vorsprünge 19 und 20, ebenfalls symmetrisch zum Mittelpunkt MP und auf der Mittellinie M-M Bohrungen 23 und 24. Die Vorsprünge 19 und 20 springen in die gleiche Richtung vor, wie die Versteifungsrippen 14 und 15.

Auf der den Vorsprüngen 19 und 20 bzw. den Versteigungsrippen 14 und 15 entgegengesetzten Fläche der Zwischenplatte 11 befinden sich in Abstand t von den Schmalseitenkanten 25 und 26 Nasen 27 und 28, jeweils vier an der Zahl, wie aus Fig. 6 ersichtlich.

Auf der Seite der Zwischenplatte 11, auf der die Vorsprünge 19 und 20 sitzen, ist der Sockel 29 einer Steckdose befestigt, wobei der Sockel axiale Durchbrechungen 30 und 31 aufweist, durch die die Vorsprünge 19 und 20 hindurchgeschnappt sind, so daß der Sockel 29 auf der Zwischenplatte 11 verrastet ist.

Der Sockel 12 besitzt eine Rippe 32, und auf der Seite, die auf der Zwischenplatte 11 aufliegt, beidseitig Aussparungen 33 und 34, wodurch parallel zur Zwischenwandung bzw. Zwischenplatte 11 gebildete Auflageflächen 35 und 36 gebildet werden, die auf den Verstärkungsrippen 14 und 15 an den Flächen 37 aufliegen.

Nach der Montage des Sockels auf der Zwischenplatte 11 wird die Zwischenplatte 11 mit dem Sockel 12 mit einer Kappe 38 verriegelt. Die Kappe 38 besitzt einen rechteckförmigen, kegelstumpfförmigen oberen Bereich 39, an den sich, um den Bereich 39 umlaufend, ein Abschnitt 40 anschließt, der - im montierten Zustand - mit der Dose 10 einen stumpfen Winkel bildet und dessen Winkel an die Abschrägung 17 und 18 der Versteifungsrippe 14 und 15 angepaßt sind. Im Bereich der Abschnitte 40 sind Verriegelungsnocken 41 angebracht, die durch die Bohrungen 23 und 24 in der Zwischenplatte hindurchrasten und so die Zwischenplatte 11 mit dem Sockel 12 mit der Kappe 13 verbinden. Die Kappe 13 besitzt, anschließend an den Abschnitt bzw. die Abschnitte 40, einen umlaufenden Kragen 42, der im montierten Zustand die Dose 10, die bei der Ausführung nach Fig. 1 eine Rechteckform aufweist, umgreift, wobei der freie Rand der Dose 10 zwischen die Nasen 28 und den Kragen 42 hineingreift, so daß eine seitliche Verschiebung nicht mehr möglich ist.

An ihrem dem Kragen 42 entgegengesetzten Ende besitzt die Kappe zwei Vertiefungen 43 und 44, so daß zwei Stecker eingefügt werden können. Die innere Kontur der Vertiefungen 43 und 44 ist der Schukosteckerform angepaßt.

In Fig. 1 sind strichpunktiert zwei Löcher zur Aufnahme von Befestigungsschrauben eingezeichnet, mit denen die Kappe am Sockel befestigt werden könnte; diese strichpunktierten Löcher, die in der Fig. 1 die Bezugsziffer 45 tragen, sind bei der erfindungsgemäßen Ausgestaltung nicht mehr nötig.

Dadurch, daß der Sockel auf der Zwischenplatte 11 und die Zwischenplatte 11 an der Kappe 13 verrastet ist, kann die Kappe nur mit Sockel von der Abzweigdose 10 oder der Dose 10 entfernt werden.

An der Innenseite der Vertiefungen 43 und 44 sind Auflageflächen 45 und 46 vorgesehen, mit der die Bodenwände 47 und 48 der Veriefungen 43 bzw. 44 auf der Rippe 32 des Sockels 12 aufliegen.

## Patentansprüche

1. Insbesondere als Aufputzeinrichtung ausgebildetes Installationsmaterial für ein elektrisches Bauteil z. B. Schalter, Steckdose und dgl., mit einer Dose (10), die vorzugsweise eine Aufputzdose ist, mit einer das elektrische Bauteil (12) abdeckenden Kappe (13), mit einem Träger (11) für das elektrische Bauteil (12), z. B. den Sockel einer Steckdose, wobei das elektrische Bauteil (12), vorzugsweise der Sockel, zwischen der Kappe (13) und dem Träger (11) auf letzterem befestigt ist, und wobei die vormontierbare Einheit aus Träger (11), elektrischem Bauteil (12) und Kappe (13) auf dem freien Rand der Dose (10) befestigbar ist, dadurch gekennzeichnet, daß der Träger als Trägerplatte (11) ausgebildet und mit dem elektrischen Bauteil (12) an der Kappe (13) verrastet ist, wobei die Kappe (13) die Trägerplatte (11) mit einem Kragen (42) umgreift.

2. Installationsmaterial nach Anspruch 1, dadurch gekennzeichnet, daß die Kappe (13) mit einem Kragen (42) nach Montierung auf der Dose (10) diese wenigstens teilweise umgreift.

3. Installationsmaterial nach einem der Ansprüche 1 oder 2, dadurch gekennzeichnet, daß an der dosenseitigen Fläche der Trägerplatte (11) Vorsprünge oder Nasen (27, 28) in einem der Dicke der Wand der Dose (10) entsprechenden Abstand vom Rand der Trägerplatte angeformt sind, die im montierten Zustand gegen die Innenfläche der Wand der Dose (10) anliegen.

4. Installationsmaterial nach einem der vorherigen Ansprüche, dadurch gekennzeichnet, daß das elektrische Bauteil (12) mit der Trägerplatte (11) verrastet ist.

5. Installationsmaterial nach einem der vorherigen Ansprüche, dadurch gekennzeichnet, daß an der Trägerplatte (11) wenigstens eine Versteifungsrippe (14, 15) angeformt ist.

6. Installationsmaterial nach Anspruch 5, dadurch gekennzeichnet, daß die Versteifungsrippe (14, 15) zur Festlegung des elektrischen Bauteils (12) dient.

## Claims

1. Installation material, designed in particular as surface-mounting apparatus, for an electric component, for example a switch, socket-outlet and the like, having a box (10), which is preferably a surface-type box, having a cap (13) covering the electric component (12), having a carrier (11) for the electric component (12), for example the base of a socket-outlet, the electric component (12), preferably the base, being fastened between the cap (13) and the carrier (11) on the latter, and it being possible for the preassemblable unit composed of the carrier (11), electric component (12) and cap (13) to be fastened on the free edge of the box (10), characterized in that the carrier is designed as a carrier plate (11) and latched with the electric component (12) at the cap (13), the cap (13) embracing the carrier plate (11) with a collar (42).

2. Installation material according to Claim 1, characterized in that after mounting on the box (10) the cap (13) embraces the latter at least partially with a collar (42).

3. Installation material according to one of Claims 1 or 2, characterized in that projections or noses (27, 28) which bear against the inner surface of the wall of the box (10) in the mounted state are integrally formed on the box-side face of the carrier plate (11) at a spacing from the edge of the carrier plate corresponding to the thickness of the wall of the box (10).

4. Installation material according to one of the preceding claims, characterized in that the electric component (12) is latched with the carrier plate (11).

5. Installation material according to one of the preceding claims, characterized in that at least one stiffening rib (14, 15) is integrally formed on the carrier plate (11).

6. Installation material according to Claim 5, characterized in that the stiffening rib (14, 15) serves to fix the electric component (12).

## Revendications

1. Matériel d'installation, réalisé en particulier sous la forme d'un dispositif en saillie, pour un élément constitutif électrique, par exemple un interrupteur, une prise de courant, etc., comportant une boîte (10) qui est de préférence une boîte en saillie, comportant une coiffe (13) recouvrant l'élément constitutif électrique (12), comportant un élément porteur (11) pour l'élément constitutif électrique (12), par exemple le support d'une prise de courant, dans lequel l'élément constitutif électrique (12), de préférence le support, est fixé à l'élément porteur (11) entre ce dernier et la coiffe (13) et dans lequel l'ensemble qui peut être monté au préalable, et constitué par l'élément porteur (11), l'élément constitutif électrique (12) et la coiffe (13), peut être fixé sur le bord libre de la boîte (10), ***caractérisé en ce que*** l'élément porteur est réalisé sous la forme d'une plaque porteuse (11) et est accroché avec l'élément constitutif électrique (12) à la coiffe (13), la coiffe (13) entourant la plaque porteuse (11) par un rebord (42).

2. Matériel d'installation suivant la revendication 1, caractérisé en ce que la coiffe (13) entoure au moins partiellement par un rebord (42) la boîte (10) après un montage sur celle-ci.

3. Matériel d'installation suivant l'une des revendications 1 et 2, caractérisé en ce que sont façonnées sur les surfaces, du côté de la boîte, de la plaque porteuse (11), à une distance du bord de la plaque porteuse qui correspond à l'épaisseur de la paroi de la boîte (10), des saillies ou excroissances (27, 28) qui, à l'état monté, sont appliquées contre la surface interne de la paroi de la boîte (10).

4. Matériel d'installation suivant l'une des revendications précédentes, caractérisé en ce que l'élément constitutif électrique (12) est accroché à la plaque porteuse (11).

5. Matériel d'installation suivant l'une des revendications précédentes, caractérisé en ce qu'au moins une nervure de renforcement (14, 15) est façonnée sur la plaque porteuse (11).

6. Matériel d'installation suivant la revendication 5, caractérisé en ce que la nervure de renforcement (14, 15) sert à la fixation de l'élément constitutif électrique (12).
